(19) Europäisches Patentamt
European Patent Office
Office européen des brevets

(11) **EP 2 692 915 B1**

(12) **EUROPEAN PATENT SPECIFICATION**

(45) Date of publication and mention
of the grant of the patent:
**03.05.2017 Bulletin 2017/18**

(21) Application number: **12765912.6**

(22) Date of filing: **14.03.2012**

(51) Int Cl.:
***D01F 9/08*** *(2006.01)*    ***C03B 37/05*** *(2006.01)*
***C03C 13/00*** *(2006.01)*

(86) International application number:
**PCT/JP2012/001787**

(87) International publication number:
**WO 2012/132287 (04.10.2012 Gazette 2012/40)**

(54) **METHOD FOR MANUFACTURING BIO-SOLUBLE INORGANIC FIBER**

VERFAHREN ZUR HERSTELLUNG BIOLÖSLICHER ANORGANISCHER FASERN

PROCÉDÉ DE FABRICATION D'UNE FIBRE INORGANIQUE BIOSOLUBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2011 JP 2011077940**

(43) Date of publication of application:
**05.02.2014 Bulletin 2014/06**

(73) Proprietor: **Nichias Corporation
Tokyo 104-8555 (JP)**

(72) Inventors:
• **KITAHARA, Hideki
Tokyo 105-8555 (JP)**
• **MOCHIDA, Takahito
Tokyo 105-8555 (JP)**
• **NAKAJIMA, Takashi
Tokyo 105-8555 (JP)**
• **MIHARA, Tetsuya
Tokyo 105-8555 (JP)**
• **YONAIYAMA, Ken
Tokyo 105-8555 (JP)**

• **KOBAYASHI, Noboru
Tokyo 105-8555 (JP)**
• **ABE, Ikuo
Tokyo 105-8555 (JP)**
• **NAGASE, Hideo
Tokyo 105-8555 (JP)**

(74) Representative: **Schmitz, Joseph
Isler & Pedrazzini AG
Giesshübelstrasse 45
Postfach 1772
8027 Zürich (CH)**

(56) References cited:
EP-A1- 1 760 051      EP-A2- 1 323 687
WO-A1-92/12941       WO-A1-97/16386
WO-A1-2006/048610   WO-A1-2007/086677
WO-A2-2005/000971   JP-A- 63 239 135
JP-A- S56 114 846     JP-A- S63 239 136
JP-A- 2005 514 318     JP-A- 2008 088 015
US-A- 4 238 213        US-A- 5 954 852

**Description**

TECHNICAL FIELD

The invention relates to a method of producing biosoluble inorganic fibers.

BACKGROUND ART

Inorganic fibers are lightweight, have a good handling capability, and exhibit excellent heat resistance. Therefore, inorganic fibers are used as a heat-resistant seal material, for example. In recent years, it has been pointed out that health problems may occur due to inhalation of inorganic fibers into to a lung of a living body. Therefore, biosoluble inorganic fibers that do not cause (or rarely cause) health problems upon inhalation have been developed (see Patent Documents 1 and 2, for example).

Patent Documents 3 and 4 disclose producing inorganic fibers having an average fiber diameter of 100 to 2000 nm or 3 to 50 $\mu$m by an electrospinning method. Patent Document 5 discloses producing inorganic fibers having an average fiber diameter of 4 to 10 $\mu$m and containing alumina as the main component by a blowing method that produces fibers by applying compressed air to a raw material melt.

Patent Documents 6 to 9 disclose an air spinning method that supplies a raw material melt to a rotor, and produces fibers by utilizing the centrifugal force of the rotor and air jetted from the periphery of the rotor. Patent Documents 8 and 9_disclose that fibers having excellent properties are obtained by producing rock wool having an $SiO_2$ content of less than 70% at a high centrifugal acceleration. Patent Document 6 discloses a method that controls the fiber diameter with the viscosity of a melt and the centrifugal acceleration. Patent Document 7 discloses the velocity of the first rotor.

Related Art Documents

[Patent Documents]

Patent Document 1: Japanese Patent No. 3753416
Patent Document 2: JP-T-2005-514318
Patent Document 3: JP-A-2010-202983
Patent Document 4: JP-A-2010-189798
Patent Document 5: JP-A-2003-105658
Patent Document 6: JP-A-63-239135
Patent Document 7: JP-A- 63-230535
Patent Document 8: JP-T-06-504257
Patent Document 9: Japanese Patent No.3260367

WO2005/000971 discloses temperature resistant vitreous inorganic fibers that are usually high in $SiO_2$ and difficult or impossible to fiberize. This problem is solved by including lanthanide elements in the composition of the vitreous inorganic fibers.

JP-A-56114846 discloses a rotary-gas-jet for making glass fiber in which method the flow rate of the molten glass through a spout is independently controlled with a plunger.

SUMMARY OF THE INVENTION

Biosoluble inorganic fibers contain silica ($SiO_2$) as the main component, and also contain calcia (CaO), magnesia (MgO), and the like. Since the fire resistance of the fibers increases as the silica content in the fibers increases, fibers having a high silica content have been developed. However, if the raw material has a silica content of 70 wt% or more, it is difficult to obtain fibers having a small fiber diameter (diameter) due to an increase in viscosity of the raw material. Therefore, biosoluble fibers currently on the market have a diameter of 4.5 $\mu$m or more. It has been very difficult to stably produce fibers having a diameter of several $\mu$m and having a low shot content at a high temperature of about 2000°C.

An object of the invention is to provide a method that can industrially and stably produce biosoluble inorganic fibers having a small diameter which it is impossible or difficult to produce by a known method due to high viscosity, or from the raw material of which only fibers with a large diameter can be produced by the known method.

The inventors of the invention conducted extensive studies in order to achieve the above object, and found that the diameter of fibers including 70 wt% or more of silica can be reduced while reducing the shot content under specific production conditions. This finding has led to the completion of the invention.

The invention provides a method of producing inorganic fibers comprising heating and melting an inorganic raw material that comprises 70 wt% to 80 wt% of silica and 15 wt% to 30 wt% of magnesia and calcia in total and does not comprise BaO in a container (10) to obtain a melt having a melt viscosity of 15 poise or less,

rotating two or more rotors (20), opposing rotors (20) rotating clockwise and counterclockwise respectively, ,

supplying the melt to an outer circumferential surface of one rotor (20) whereby the melt flows over the outer circumferential surface of each rotor (20),

rotating the rotors (20) at an acceleration of 70 km/s$^2$ or more,

drawing the melt due to a centrifugal force caused by rotation of the rotor (20) to obtain fibers,

blowing the fibers off by blowing air around the rotor (20), and

collecting the fibers to obtain fibers having an average fiber diameter of 5 μm or less,

wherein the container (10) has a hole (16) for supplying the melt to the rotor (20) at its bottom, a rod (18) is provided inside the container (10) toward the hole (16), and the amount of the melt supplied to the rotor (20) is adjusted by bringing the rod (18) close to the hole (16) when the hole (16) has increased in diameter,

the melt viscosity of the melt and the acceleration of the rotor (20) satisfy the following expressions,

$$A \geq 36.81 \times P - 11.21$$

$$15 \geq P$$

where, P is the melt viscosity in dPa.s (poise) of the melt, and A is the acceleration (km/s$^2$) of the rotor (20), and the fibers have the following composition,

$SiO_2$: 70 wt% to 80 wt
$CaO$: 1 wt% to 9 wt%
$MgO$: 10 wt% to 29 wt%
$Al_2O_3$: less than 3 wt%.

The invention makes it possible to stably and industrially produce biosoluble inorganic fibers having a small diameter.

BRIEF DESCRIPTION OF THE DRAWINGS

FIG. 1 is a view illustrating an example of an apparatus that may be used for a production method according to the invention.

FIG. 2 is a view illustrating the relationship between the melt viscosity of fibers that differ in composition and the temperature.

FIG. 3 is a view illustrating the relationship between the melt viscosity and the fiber diameter of fibers that differ in composition.

FIG. 4 is a view illustrating the relationship between the presence or absence of a rod and a change in the amount of a melt supplied with time.

DETAILED DESCRIPTION OF THE PREFERRED EMBODIMENTS

The invention aims at producing inorganic fibers (silica-alkaline-earth-metal fibers) that include 70 wt% to 80 wt% of silica and 15 to 30 wt% of magnesia and calcia in total. Such fibers are known as biosoluble fibers.

The silica-alkaline-earth-metal fibers are used for various applications (e.g., heat insulator). It is desirable that the silica-alkaline-earth-metal fibers have an average diameter of about 5 μm or less.

Even if the silica-alkaline-earth-metal fibers with a small fiber diameter are inhaled into a human body, the fibers are easily dissolved in the body. Moreover, the silica-alkaline-earth-metal fibers have a smooth texture (are not scratchy). If the fibers have a small average diameter, the number of fibers per unit volume of the product increases. Therefore, the heat insulation effect is improved due to a decrease in thermal conductivity. Moreover, a dense product is obtained, so that the heat insulation effect is improved. The tensile strength also increases as the number of fibers increases. A number of advantages are thus obtained by a small fiber diameter.

However, not too small fiber diameter is required for molding. In JP-A-2010-202983, fibers with a nanometer level diameter are obtained by electrostatic spinning. The invention does not aim at producing such fibers. The diameter of the inorganic fibers produced by the method according to the invention is preferably 2 $\mu$m or more.

A blowing method and a spinning method are known as a fiber production method. Silica-alkaline-earth-metal fibers produced by the blowing method tend to have a high shot content. Therefore, the method according to the invention utilizes the spinning method. The spinning method includes supplying a melt of a raw material to a rotating rotor, and drawing the melt by utilizing the centrifugal force of the rotor and air jetted from the periphery of the rotor to produce fibers.

The raw material must be melted at a very high temperature when producing small diameter fibers that include 70 wt% to 80 wt% of silica using the spinning method. Therefore, it is necessary to employ conditions that achieve a high temperature, and stably supply the melt to the rotor without damage due to a high temperature. If the melt is not stably supplied, the melt comes in contact with the rotor in an unstable state, and, as a result, the properties of the fibers produced may deteriorate. The invention achieves high-temperature melting and stable supply by combining a plurality of conditions, and thus makes it possible to industrially produce thin silica-alkaline-earth-metal fibers that exhibit good quality and have an average diameter of about 5 $\mu$m or less. The average diameter is determined by the method described in the examples.

The resulting fibers normally have a content of shots having a dimension of 45 $\mu$m or more of 65% or less (e.g., 30 to 55%). The shot content is determined by the method described in the examples.

A production method according to one embodiment of the invention is described in detail below with reference to the drawings.

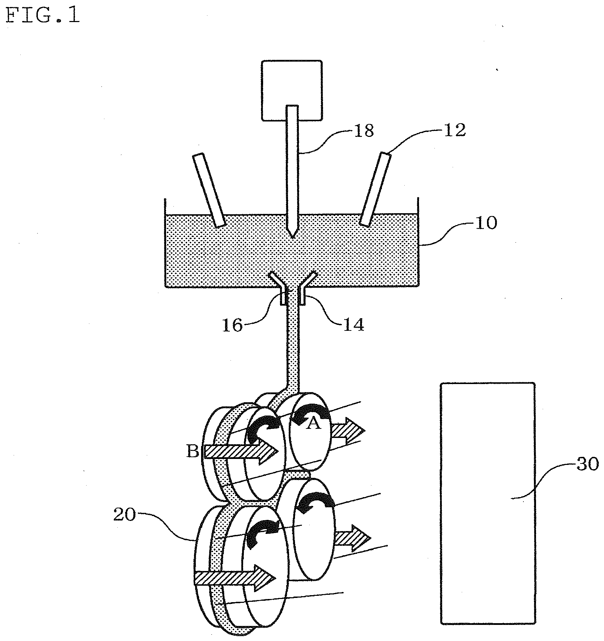

FIG. 1 illustrates an example of an apparatus that may be used for the production method according to the embodiment.

Raw materials (e.g., silica sand, magnesium oxide, magnesium carbonate, wollastonite, calcium carbonate, strontium carbonate, kaolin, and alumina) are melted in a container 10 to obtain a melt having a low melt viscosity of 15 poise or less (preferably 10 poise or less, 7 poise or less, 5 poise or less, or 4 poise or less). The lower limit of the melt viscosity is 1 poise or more from the viewpoint of ease of implementation. The heating temperature is not limited insofar as a given viscosity is achieved, but is normally about 1600 to about 2400°C, and particularly about 1700 to about 2400°C. All the raw materials are preferably melted by the above operation.

Two or more electrodes 12 are provided in the container 10, and the raw material is melted by heating via the electrodes. The electrodes 12 may be formed of a heat-resistant material (e.g., molybdenum). It is preferable that the container 10 be formed of boiler steel, and have a cooling unit.

The electric power applied to the electrodes 12 is preferably 0.15 to 0.70 kW/kg, and more preferably 0.25 to 0.70 kW/kg.

An orifice 14 that allows the melt to flow toward a rotor 20 is formed at the bottom of the container 10. The orifice has a funnel-shaped hole 16. The amount of the melt that flows toward the rotor 20 is adjusted by adjusting the diameter and the length of the hole of the orifice. The amount of the melt that flows toward the rotor 20 increases as the diameter of the hole increases and the length of the hole decreases. The wall of the orifice is damaged when the high-temperature melt continuously flows through the hole, and, as a result, the diameter of the hole increases. The amount of the melt that flows toward the rotor 20 increases (i.e., an unstable state occurs) as the diameter of the hole increases. In the apparatus shown in FIG. 1, a rod 18 is vertically provided inside the container 10 toward the hole 16. The end of the rod preferably has a shape corresponding to the shape of the hole. In the apparatus shown in FIG. 1, the rod has a sharp end. It is preferable to lower the control rod when the diameter of the hole has increased in order to allow a constant amount of the melt to be supplied to the rotor.

The melt is supplied to the rotating rotor 20 via the orifice 14. The melt is supplied at a speed of 100 to 1000 kg/h, for example, and preferably 250 to 800 kg/h.

Two or more rotors (preferably 2 to 4 rotors) are used so that the opposing rotors rotate clockwise and counterclockwise in the inward direction indicated by arrows A. The melt is supplied to the outer circumferential surfaces of one rotor. The melt then flows over the outer circumferential surface of each rotor.

The melt is drawn due to the centrifugal force caused by rotation of the rotor 20 to obtain fibers. In the embodiment, the acceleration of the rotor is 70 km/s$^2$ or more. It is preferable that the acceleration of each rotor be 70 km/s$^2$ or more. The acceleration is preferably 100 km/s$^2$ or more, more preferably 150 km/s$^2$ or more, and still more preferably 250 km/s$^2$ or more. The upper limit of the acceleration is 550 km/s$^2$ or less from the viewpoint of ease of implementation.

The viscosity and the acceleration are combined within the melt viscosity range and the acceleration range mentioned above, whereby fibers having a small diameter can be obtained.

For example, the melt viscosity is adjusted to 4 dPa.s (poise) or less, and the acceleration is adjusted to 115 km/s$^2$ or more, or the melt viscosity is adjusted to 7 dPa.s (poise) or less, and the acceleration is adjusted to 259 km/s$^2$ or more.

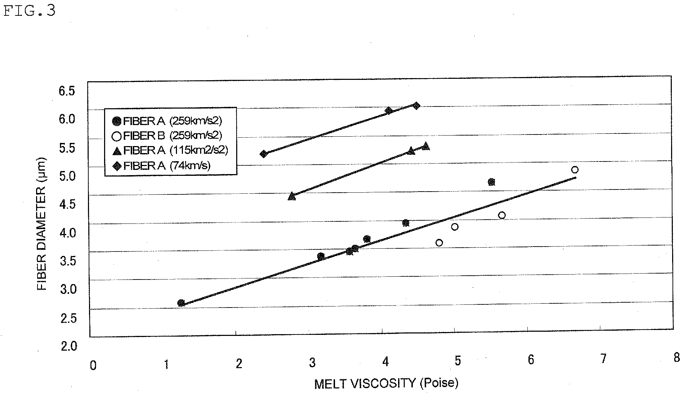

Data shown in FIG. 3 indicates that the fiber diameter, the viscosity, and the acceleration satisfy the following relationship.

$$D=-1.16\times10^{-2}\times A+4.27\times10^{-1}\times P+4.87$$

where, D is the fiber diameter ($\mu$m), P is the melt viscosity in dPa.s (poise) of the melt, and A is the acceleration (km/s$^2$) of the rotor.

Therefore, when the melt viscosity and the acceleration satisfy the following expressions, fibers having a diameter of 5 $\mu$m or less are obtained.

$$A\geq36.81\times P-11.21$$

$$15\geq P$$

where, P is the melt viscosity in dPa.s (poise) of the melt, and A is the acceleration (km/s$^2$) of the rotor.

The melt viscosity P in dPa.s of the melt is more than 0, preferably 0.5 or more, and more preferably 1 or more.

Stripping air is blown around the rotors 20 in the direction of a collector 30 indicated by arrows B. Stripping air nozzles (outlet) are preferably provided near the rotors. The distance between the stripping air nozzles and the rotors is preferably 0 to 300 mm. The stripping air nozzles may be provided on the rotors, or may be provided at a position away from the rotors.

The fibers blown off due to stripping air are collected by the collector 30 to obtain collective inorganic fibers.

Comparative silica-alkaline-earth-metal fibers can be produced by a comparative method include 70 wt% or more of silica, and 10 to 30 wt% of magnesia and calcia in total. If the silica content is 70 wt% or more, excellent heat resistance is obtained. If the total content of magnesia and calcia is 10 to 30 wt%, excellent biosolubility is obtained.

The silica content is preferably 70 to 80 wt%, and more preferably 71 to 79 wt%.

The total content of magnesia and calcia is preferably 15 to 28 wt%, and more preferably 19 to 28 wt%.

The fibers may further include $Al_2O_3$ (e.g., 5 wt% or less, 1 to 4 wt% or 1 to 2 wt%) $K_2O$, $Na_2O$, $Fe_2O_3$, $ZrO_2$, $P_2O_4$, $B_2O_3$, $La_2O_3$, and the like.

The total content of $SiO_2$, CaO, MgO, and $Al_2O_3$ may be more than 95 wt%, or more than 97 wt%, or more than 98 wt%.

Silica-alkaline-earth-metal fibers may be roughly divided into Mg silicate fibers having a high MgO content, and Ca silicate fibers having a high CaO content. Mg silicate fibers may have the following composition. (some of these fibers are not according to the method of the invention)

$SiO_2$: 70 to 82 wt% (preferably 70 to 80 wt%, and more preferably 71 to 79 wt%)
CaO: 1 to 9 wt% (preferably 2 to 8 wt%)
MgO: 10 to 29 wt% (preferably 10 to 25 wt%)
$Al_2O_3$: less than 3 wt% (preferably less than 2 wt%)
Other oxides: less than 2 wt% (preferably less than 1 wt%)

Comparative Ca silicate fibers may have the following composition. Such fibers are preferable from the viewpoint of heat resistance and biosolubility. The Ca silicate fibers tend to have a low melt viscosity at a low temperature (i.e., the fiber diameter can be more easily reduced) as compared with the Mg silicate fibers.

$SiO_2$: 66 to 82 wt% (for example, it can be 68 to 82 wt%, 70 to 82 wt%, 70 to 80 wt%, 71 to 80 wt% or 71.25 to 76 wt%)
CaO: 10 to 34 wt% (for example, it can be 18 to 30 wt%, 18 to 29 wt%, 20 to 27 wt% or 21 to 26 wt%)
MgO: 3 wt% or less (for example, it can be 1 wt% or less)
$Al_2O_3$: 5 wt% or less (for example, it can be 3.4 wt% or less, or 3.0 wt% or less. Further, it can be 0.1 wt% or more, 0.5 wt% or more, 1.1 wt% or more or 2.0 wt% or more.)
Other oxides: less than 2 wt%

If $SiO_2$ is in the above-mentioned range, excellent heat resistance can be exhibited. If CaO and MgO are in the above-mentioned ranges, excellent biosolubility before and after heating can be exhibited. If $Al_2O_3$ is in the above-mentioned range, excellent heat resistance can be exhibited.

Further, the total content of $SiO_2$, CaO, MgO and $Al_2O_3$ may be more than 98wt% or more than 99 wt%.

The above-mentioned biosoluble inorganic fibers may or may not contain, as other components, one or more components selected from alkali metal oxides ($K_2O$, $Na_2O$, $Li_2O$ and the like), oxides of a component selected from Sc, La, Ce, Pr, Nd, Sm, Eu, Gd, Tb, Dy, Ho, Er, Tm, Yb, Lu, Y or a mixture thereof, $Fe_2O_3$, $ZrO_2$, $TiO_2$, $P_2O_5$, $B_2O_3$, MnO, ZnO, SrO, BaO, $Cr_2O_3$, and the like. Each of other oxides may be contained in an amount of 1.0 wt% or less, 0.2 wt% or less, or 0.1 wt% or less. Each of alkali metal oxides may be contained in an amount of 1.0 wt% or less, 0.2 wt% or less, or 0.1 wt% or less. Further, the total amount of alkali metal oxides may be 1.0 wt% or less, 0.2 wt% or less, or 0.1 wt% or less.

The above fibers having the above composition exhibit excellent biosolubility, and exhibit an increase in biosolubility after heating.

EXAMPLES

Experiment 1

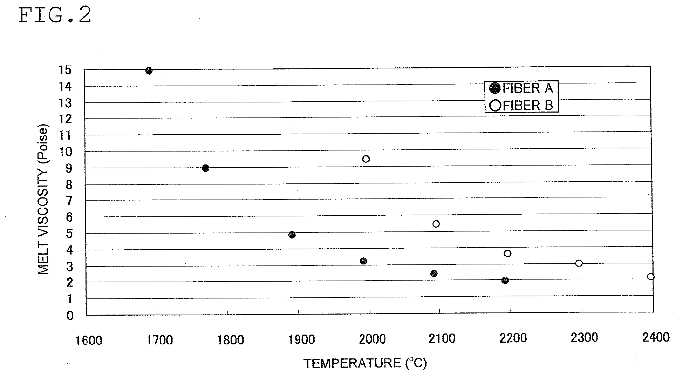

Raw materials for comparative fibers A and fibers B having a composition shown in Table 1 were heated and melted at 1700 to 2400°C in a container by applying an electric power of 0.15 kW/kg to electrodes to obtain a melt having a melt viscosity of 1 to 15 dPa.s (poise) FIG. 2 illustrates the relationship between the melt viscosity of the comparative fibers A and fibers B and the temperature.

The resulting melt was supplied to a rotor rotating at an acceleration of 74, 115, or 259 km/s$^2$ via an orifice of the container at a speed of about 300 to 600 kg/h. The amount of the melt supplied was adjusted within a certain range using a control rod. Fibers were produced while blowing air around the rotors. FIG. 3 illustrates the relationship between the melt viscosity and the average diameter of the resulting comparative fibers A and fibers B.

The comparative fibers A produced at a melt viscosity of 3 poise and an acceleration of 259 km/s$^2$ had a low flakes (shot) content of 40 to 50%.

The following measuring methods were used in the experiment.

(1) Average fiber diameter

The fibers were observed and photographed using an scanning electron microscope. The diameter of 400 or more fibers photographed was measured, and the average value of all the measured diameters was taken as the average fiber diameter.

(2) Shots

The fibers were rubbed on a sieve having a aperture size of 45 $\mu$m while sucking the fibers from the back surface of the sieve, and particles remaining on the sieve were determined to be shots.

(3) Melt viscosity

The melt viscosity was measured using a lifting sphere viscosimeter.

TABLE 1

|  |  | Comparative Fibers A | Fibers B |
|---|---|---|---|
| Fiber composition (wt%) | $SiO_2$ | 73.1 | 76.2 |
|  | CaO | 24.8 | 4.0 |
|  | MgO | 0.3 | 17.6 |
|  | $Al_2O_3$ | 1.6 | 1.8 |
|  | $Fe_2O_3$ | 0.2 | 0.2 |
|  | $K_2O$ | 0.0 | 0.2 |
|  | $Na_2O$ | 0.0 | 0.0 |
|  | $ZrO_2$ | 0.0 | 0.0 |
|  | $P_2O_5$ | 0.0 | 0.0 |
|  | $B_2O_3$ | 0.0 | 0.0 |
|  | $La_2O_3$ | 0.0 | 0.0 |
| Note: The unit of the composition is wt%. | | | |

Experiment 2

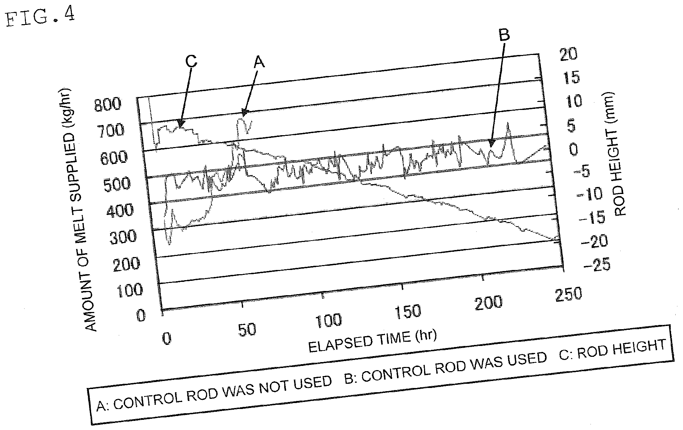

Comparative fibers A were produced in the same manner as in Experiment 1 at a melt viscosity of 5 dPa.s (poise) and an acceleration of 259 km/s$^2$. In Experiment 2, a change in the amount of the melt supplied to the rotor with time was measured with or without the control rod. The rod was lowered as the diameter of the hole of the orifice increased. The results are shown in FIG. 4 and Table 2. The height of the rod is also shown in FIG. 4. It was confirmed that a change in the amount of the melt supplied to the rotor could be suppressed by utilizing the rod, whereby the fiber diameter was reduced.

TABLE 2

|  | Amount of melt supplied | Standard deviation | Fiber diameter |
|---|---|---|---|
| Rod was used | 340-550 | 36 | 3.5-3.9 |
| Rod was not used | 330-670 | 120 | 3.5-5.1 |

Experiment 3

Comparative fibers A were produced in the same manner as in Experiment 1 at a melt viscosity of 5 dPa.s (poise) and an acceleration of 259 km/s$^2$. In Experiment 3, the supply temperature and the viscosity of the melt were measured while changing the power applied to the electrodes. The results are shown in Table 3.

TABLE 3

| Applied power (kW/kg) | Comparative Fibers A | | Fibers B | |
|---|---|---|---|---|
|  | Supply temperature (°C) | Melting viscosity (poise) | Supply temperature (°C) | Melting viscosity (poise) |
| 0.10 | 1631 | 17.4 | 1877 | 14.0 |
| 0.15 | 1678 | 14.0 | 1919 | 11.8 |
| 0.20 | 1724 | 11.3 | 1961 | 9.9 |
| 0.25 | 1770 | 9.1 | 2003 | 8.4 |
| 0.50 | 2002 | 3.5 | 2213 | 3.8 |
| 0.60 | 2095 | 2.4 | 2297 | 2.9 |

(continued)

| Applied power (kW/kg) | Comparative Fibers A | | Fibers B | |
|---|---|---|---|---|
| | Supply temperature (°C) | Melting viscosity (poise) | Supply temperature (°C) | Melting viscosity (poise) |
| 0.70 | 2188 | 1.7 | 2381 | 2.2 |

Experiment 4

Comparative fibers C and D having a composition (wt%) shown in Table 4 were produced by the following method.

Raw materials were heated and melted in a container to obtain a melt having a melt viscosity of 5 to 6 dPa.s (poise) The resulting melt was supplied to a rotor rotating at an acceleration of 259 km/s$^2$. The melt was drawn using the centrifugal force caused by rotation of the rotor to obtain fibers. The fibers were blew off by blowing air around the rotor, and collected.

The average fiber diameters of the resulting fibers were measured by the method described in Example 1. A 25 mm-thick-blanket having a density of 128 kg/m$^3$ was produced from the fibers and the tensile strength of the blanket was measured with a universal tester. The results are shown in Table 4. The resulting fibers had a good appearance, a good shape and a low shot content. Further, the resulting fibers had a good tensile strength.

TABLE 4

| | | Comparative Fiber C | Comparative Fiber D |
|---|---|---|---|
| Composition | $Na_2O$ | 0.0 | 0.0 |
| | MgO | 0.3 | 0.3 |
| | $Al_2O_3$ | 3.0 | 2.5 |
| | $SiO_2$ | 73.2 | 72.8 |
| | $K_2O$ | 0.1 | 0.1 |
| | CaO | 23.2 | 24.1 |
| | $Fe_2O_3$ | 0.2 | 0.1 |
| | $La_2O_3$ | 0 | 0 |
| Average Fiber Diameter ($\mu$m) | | 4.59$\mu$m | 3.97$\mu$m |
| Tensile Strength (kPa) | | 60 | 73 |

Inorganic fibers produced by the method according to the invention can be used for various applications as a heat insulator or an alternative to asbestos, for example.

Claims

1.   A method of producing inorganic fibers comprising:

heating and melting an inorganic raw material that comprises 70 wt% to 80 wt% of silica and 15 wt% to 30 wt% of magnesia and calcia in total and does not comprise BaO in a container (10) to obtain a melt having a melt viscosity of 15 poise or less,
rotating two or more rotors (20), opposing rotors (20) rotating clockwise and counterclockwise respectively,
supplying the melt to an outer circumferential surface of one rotor (20) whereby the melt flows over outer circumferential surface of each rotor (20),
rotating the rotors (20) at an acceleration of 70 km/s$^2$ or more,
drawing the melt due to a centrifugal force caused by rotation of the rotor (20) to obtain fibers,
blowing the fibers off by blowing air around the rotor (20), and
collecting the fibers to obtain fibers having an average fiber diameter of 5 $\mu$m or less,

wherein the container (10) has a hole (16) for supplying the melt to the rotor (20) at its bottom, a rod (18) is provided inside the container (10) toward the hole (16), and the amount of the melt supplied to the rotor (20) is adjusted by bringing the rod (18) close to the hole (16) when the hole (16) has increased in diameter, the melt viscosity of the melt and the acceleration of the rotor (20) satisfy the following expressions,

$$A \geq 36.81 \times P - 11.21$$

$$15 \geq P$$

where, P is the melt viscosity in dPa.s (poise) of the melt, and A is the acceleration (km/s$^2$) of the rotor (20), and the fibers have the following composition,

$SiO_2$: 70 wt% to 80 wt%
CaO: 1 wt% to 9 wt%
MgO: 10 wt% to 29 wt%
$Al_2O_3$: less than 3 wt%.

2. The method according to claim 1, wherein the acceleration is 100 km/s$^2$ or more.

3. The method according to claim 1 or 2, wherein the melt has a melt viscosity of 4 dPa.s (poise) or less, and is supplied to the rotor (20) that rotates at an acceleration of 115 km/s$^2$ or more.

4. The method according to claim 1 or 2, wherein the melt has a melt viscosity of 7 dPa.s (poise) or less, and is supplied to the rotor (20) that rotates at an acceleration of 259 km/s$^2$ or more.

5. The method according to any of claims 1 to 4, wherein the inorganic raw material is melted by applying 0.15 kW/kg to 0.70 kW/kg of electric power per unit raw material.

6. The method according to claim 5, wherein the inorganic raw material is melted by applying 0.25 kW/kg to 0.70 kW/kg of electric power per unit raw material.

7. The method according to any of claims 1 to 6, wherein the inorganic raw material is heated at 1600°C to 2500°C.

8. The method according to any of claims 1 to 7, wherein the melt is supplied to the rotor (20) at a speed of 100 kg/h to 1000 kg/h.

9. The method according to claim 8, wherein the melt is supplied to the rotor (20) at a speed of 250 kg/h to 800 kg/h.

10. The method according to any of claims 1 to 9, wherein the fibers have an average fiber diameter of 2 $\mu$m to 4.4 $\mu$m.

11. The method according to any of claims 1 to 10, wherein the fibers comprise shots having a dimension of 45 $\mu$m or more in an amount of 65 wt% or less.

12. The method according to any of claims 1 to 11, wherein the number of the rotors (20) is 2.


**Patentansprüche**

1. Verfahren zur Herstellung von anorganischen Fasern, umfassend:

Erwärmen und Schmelzen eines anorganischen Rohmaterials, das insgesamt 70 Gew.-% bis 80 Gew.-% Siliziumoxid und 15 Gew.-% bis 30 Gew.-% Magnesiumoxid und Calciumoxid umfasst und nicht BaO umfasst, in einem Behälter (10), um eine Schmelze mit einer Schmelzviskosität von 15 Poise oder weniger zu erhalten, Rotieren von zwei oder mehr Rotoren (20), wobei gegenüberliegende Rotoren (20) im Uhrzeigersinn bzw. gegen den Uhrzeigersinn rotieren,

Zuführen der Schmelze auf eine äussere Umfangsfläche von einem Rotor (20), wodurch die Schmelze über die äussere Umfangfläche jedes Rotors (20) fliesst,

Rotieren der Rotoren (20) bei einer Beschleunigung von 70 km/s$^2$ oder mehr,

Ziehen der Schmelze aufgrund einer durch Rotation des Rotors (20) verursachten Zentrifugalkraft, um Fasern zu erhalten,

Abblasen der Fasern durch Blasen von Luft um den Rotor (20), und

Sammeln der Fasern, um Fasern mit einem durchschnittlichen Faserdurchmesser von 5 μm oder weniger zu erhalten,

wobei der Behälter (10) an seinem Boden ein Loch (16) zum Zuführen der Schmelze zum Rotor (20) hat, ein Stab (18) innerhalb des Behälters (10) zum Loch (16) hin vorgesehen ist, und die Menge der dem Rotor (20) zugeführten Schmelze durch Näherbringen des Stabes (18) zum Loch (16) angepasst wird, wenn sich der Durchmesser des Lochs (16) erhöht hat,

die Schmelzviskosität der Schmelze und die Beschleunigung des Rotors (20) die folgenden Ausdrücke erfüllen,

$$A \geq 36.81 \times P\text{-}11.21$$

$$15 \geq P$$

wo P die Schmelzviskosität in dPa.s (Poise) der Schmelze und A die Beschleunigung (km/s$^2$) des Rotors (20) ist, und

die Fasern die folgende Zusammensetzung haben,

SiO$_2$: 70 Gew.-% bis 80 Gew.-%
CaO: 1 Gew.-% bis 9 Gew.-%
MgO: 10 Gew.-% bis 29 Gew.-%
Al$_2$O$_3$: weniger als 3 Gew.-%.

2. Verfahren nach Anspruch 1, wobei die Beschleunigung 100 km/s$^2$ oder mehr ist.

3. Verfahren nach Anspruch 1 oder 2, wobei die Schmelze eine Schmelzviskosität von 4 dPa.s (Poise) oder weniger hat und dem Rotor (20) zugeführt wird, der sich mit einer Beschleunigung von 115 km/s$^2$ oder mehr rotiert.

4. Verfahren nach Anspruch 1 oder 2, wobei die Schmelze eine Schmelzviskosität von 7 dPa.s (Poise) oder weniger hat und dem Rotor (20) zugeführt wird, der sich mit einer Beschleunigung von 259 km/s$^2$ oder mehr rotiert.

5. Verfahren nach einem der Ansprüche 1 bis 4, wobei das anorganische Rohmaterial durch Anlegen von 0.15 kW/kg bis 0.70 kW/kg elektrischer Leistung pro Einheit Rohmaterial geschmolzen wird.

6. Verfahren nach Anspruch 5, wobei das anorganische Rohmaterial durch Anlegen von 0.25 kW/kg bis 0.70 kW/kg elektrischer Leistung pro Einheit Rohmaterial geschmolzen wird.

7. Verfahren nach einem der Ansprüche 1 bis 6, wobei das anorganischen Rohmaterials auf 1600°C bis 2500°C erhitzt wird.

8. Verfahren nach einem der Ansprüche 1 bis 7, wobei die Schmelze dem Rotor (20) mit einer Geschwindigkeit von 100 kg/h bis 1000 kg/h zugeführt wird.

9. Verfahren nach Anspruch 8, wobei die Schmelze dem Rotor (20) mit einer Geschwindigkeit von 250 kg/h bis 800 kg/h zugeführt wird.

10. Verfahren nach einem der Ansprüche 1 bis 9, wobei die Fasern einen durchschnittlichen Faserdurchmesser von 2 μm bis 4.4 μm haben.

11. Verfahren nach einem der Ansprüche 1 bis 10, wobei die Fasern Schüsse umfassen, die eine Abmessung von 45 μm oder mehr in einer Menge von 65 Gew.-% oder weniger aufweisen.

**12.** Verfahren nach einem der Ansprüche 1 bis 11, wobei Anzahl der Rotoren (20) 2 ist.

**Revendications**

**1.** Un procédé de fabrication de fibres inorganiques, comprenant :

chauffer et faire fondre un matériau de départ inorganique qui comprend 70 % en poids à 80 % en poids de silice et 15 % en poids à 30 % en poids de magnésie et d'oxyde de calcium au total et qui ne comprend pas de l'oxyde de baryum, dans un contenant (10) pour obtenir une masse fondue ayant une viscosité à l'état fondu de 15 poises ou moins,
faire tourner deux ou plus rotors (20), des rotors opposés (20) tournant respectivement dans le sens des aiguilles d'une montre et dans le sens contraire des aiguilles d'une montre,
fournir la masse fondue à une surface circonférentielle extérieure d'un rotor (20) à cause de quoi la masse fondue s'écoule par la surface circonférentielle extérieure de chaque rotor (20),
faire tourner les rotors (20) à une accélération de 70 km/s$^2$ ou plus,
étirer la masse fondue dû à une force centrifuge créée par la rotation du rotor (20) pour obtenir des fibres,
chasser les fibres en soufflant de l'air autour du rotor (20), et
recueillir les fibres pour obtenir des fibres ayant un diamètre moyen de fibre de 5 $\mu$m ou moins,
dans lequel le contenant (10) a un trou (16) au niveau de son fond pour fournir la masse fondue au rotor (20), une tige (18) est prévue à l'intérieur à l'intérieur du contenant (10) vers le trou (16), et la quantité de masse fondue fournie au rotor (20) est ajustée en rapprochant la tige (18) au trou (16) lorsque le trou (16) a augmenté en diamètre,
la viscosité à l'état fondu de la masse fondue et l'accélération du rotor (20) satisfont les expressions suivantes,

$$A \geq 36.81 \times P - 11.21$$

$$15 \geq P$$

où P est la viscosité à l'état fondu en dPa·s (poise) de la masse fondue et A est l'accélération (km/s$^2$) du rotor (20), et les fibres ont la composition suivante,

$SiO_2$ : 70 % en poids à 80 % en poids
CaO : 1 % en poids à 9 % en poids
MgO : 10 % en poids à 29 % en poids
$Al_2O_3$ : inférieur à 3 % en poids

**2.** Le procédé selon la revendication 1, dans lequel l'accélération est de 100 km/s$^2$ ou plus.

**3.** Le procédé selon la revendication 1 ou 2, dans lequel la masse fondue a une viscosité à l'état fondu de 4 dPa·s (poise) ou moins, et est fournie au rotor (20) qui tourne à une accélération de 115 km/s$^2$ ou plus.

**4.** Le procédé selon la revendication 1 ou 2, dans lequel la masse fondue a une viscosité à l'état fondu de 7 dPa·s (poise) ou moins, et est fournie au rotor (20) qui tourne à une accélération de 259 km/s$^2$ ou plus.

**5.** Le procédé selon l'une quelconque des revendications 1 à 4, dans lequel le matériau de départ inorganique est fondu en appliquant de 0,15 kW/kg à 0,70 kW/kg de puissance électrique par unité de matériau de départ.

**6.** Le procédé selon la revendication 5, dans lequel le matériau de départ inorganique est fondu en appliquant 0,25 kW/kg à 0,70 kW/kg de puissance électrique par unité de matériau de départ.

**7.** Le procédé selon l'une quelconque des revendications 1 à 6, dans lequel le matériau de départ inorganique est chauffé à 1600°C à 2500°C.

**8.** Le procédé selon l'une quelconque des revendications 1 à 7, dans lequel la masse fondue est fournie au rotor (20) à une vitesse de 100 kg/h à 1000 kg/h.

9. Le procédé selon la revendication 8, dans lequel la masse fondue est fournie au rotor (20) à une vitesse de 250 kg/h à 800 kg/h.

10. Le procédé selon l'une quelconque des revendications 1 à 9, dans lequel les fibres ont un diamètre de fibre de 2 μm à 4,4 μm.

11. Le procédé selon l'une quelconque des revendications 1 à 10, dans lequel les fibres comprennent des grains ayant une dimension de 45 μm ou plus dans une quantité de 65% en poids ou moins.

12. Le procédé selon l'une quelconque des revendications 1 à 11, dans lequel le nombre de rotors (20) est 2.

FIG.1

FIG.2

FIG.3

MELT VISCOSITY (Poise)

Legend:
- ● FIBER A (259km/s2)
- ○ FIBER B (259km/s2)
- ▲ FIBER A (115km2/s2)
- ◆ FIBER A (74km/s)

FIG.4

A: CONTROL ROD WAS NOT USED    B: CONTROL ROD WAS USED    C: ROD HEIGHT

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3753416 B
- JP 2005514318 T
- JP 2010202983 A
- JP 2010189798 A
- JP 2003105658 A
- JP 63239135 A
- JP 63230535 A
- JP 6504257 T
- JP 3260367 B
- WO 2005000971 A
- JP 56114846 A